# EUROPÄISCHE PATENTANMELDUNG

(11) **EP 0 915 547 A2**
(43) Veröffentlichungstag der Anmeldung: **12.05.1999**
(21) Anmeldenummer: 98117692.8
(22) Anmeldetag: 18.09.1998
(51) Int. Cl.: H02H 1/06, H02H 3/08

(54) **Elektronisches Überlastrelais**

(30) Priorität: 04.11.1997 DE 19748627
(71) Anmelder: ABB PATENT GmbH, 68309 Mannheim (DE)
(72) Erfinder: Hülss, Rolf, Dipl.-Ing., 68766 Hockenheim (DE); Rempt, Bernd, Dipl.-Ing., 68219 Mannheim (DE); Zehnich, Paul, Dipl.-Ing., 67122 Altrip (DE)
(74) Vertreter: Miller, Toivo

(57) **Zusammenfassung**

Die Erfindung bezieht sich auf ein elektronisches Überlastrelais mit Eigenstromversorgung, wobei zur Speisung elektronischer Einrichtungen ein Sensorstrom (I_{S}) aus einem Laststromkreis entnommen wird. Es sind Mittel (R, F) vorhanden, mit deren Hilfe aus dem Sensorstrom (I_{S}) ein Meßsignal abgeleitet und daraus eine Verbrauchertemperatur (T) berechnet wird. Zur Bereitstellung einer Schaltenergie ist ein erster Kondensator (C1) vorhanden und zur Bereitstellung einer Versorgungsspannung (VDD) für elektronische Funktionseinheiten (F) ein zweiter Kondensator (C2). Beide Kondensatoren (C1, C2) werden mittels. eines Ladestroms (I_{L}), dem gleichgerichteten Sensorstrom (I_{S}) aufgeladen, jedoch der erste Kondensator (C1) nur dann, wenn die am zweiten Kondensator (C2) abgegriffene Versorgungsspannung (VDD) einen Mindestwert (VDDₘᵢₙ) erreicht hat.

## Beschreibung

Die Erfindung bezieht sich auf ein elektronisches Überlastrelais nach dem Oberbegriff des Anspruchs 1.

Ein solches Überlastrelais ist aus der US 5,283,708 bekannt. Elektronische Überlastrelais ersetzen konventionelle thermische Überlastrelais, die Bimetallelemente enthalten und die eine Auslösung (Trip) bzw. Rücksetzung (Reset) eines Schaltgeräts bewirken.

Überlastrelais werden zum Schutz eines Verbrauchers, hauptsächlich zum Schutz von Drehstrommotoren vor thermischer Überlast eingesetzt. Eine direkte Temperaturmessung im Motor ist dabei entbehrlich, da durch die Kenntnis des thermischen Verhaltens bestimmter Motortypen und aus einer Strom- und Zeiterfassung auf die Motortemperatur geschlossen werden kann. Elektronische Überlastrelais haben gegenüber konventionellen Überlastrelais eine Reihe von Vorteilen, insbesondere arbeiten sie zuverlässiger und sind einfacher kalibrierbar. Je nach Ausführung kann die Ermittlung einer Überlastsituation, also der Motortemperatur auch genauer sein als bei konventionellen Überlastrelais.

In der US 5,283,708 ist ein elektronisches Überlastrelais beschrieben, bei dem der jeweilige Motorstrom erfaßt und unter Verwendung eines mathematischen Modells zur Nachbildung des thermischen Verhaltens des Motors die jeweilige Motortemperatur berechnet wird. Mit thermischen Modellen können auch Betriebsarten und Fehlersituationen beherrscht werden, wie Ausfall einer Phase, mechanisches Blockieren des Antriebs, und andere. Es stehen für die jeweiligen Motortypen ausreichend genaue thermische Modelle zur Verfügung.

Ein elektronisches Überlastrelais benötigt eine Stromversorgung für den Betrieb seiner elektronischen Funktionseinheiten und zur Speisung elektromagnetischer Auslöse- und Rücksetzeinrichtungen. Damit elektronische Überlastrelais ohne eine besondere Maßnahme gegen konventionelle Überlastrelais austauschbar sind, sind zusätzliche Stromversorgungsanschlüsse an elektronischen Überlastrelais zu vermeiden. Das aus der US 5,283,708 bekannte elektronische Überlastrelais ist daher mit einer Eigenstromversorgung ausgestattet. Dabei wird mittels Stromwandlern dem Laststromkreis ein Sensorstrom entnommen, gleichgerichtet und als Ladestrom für zwei Speicherkondensatoren (35, 46) verwendet. Aus dem Sensorstrom wird außerdem ein Strommeßsignal für die Temperaturberechnung abgeleitet.

Es werden zwei Kondensatoren (35, 46) verwendet, die zwar parallel und ständig aus dem gleichgerichteten Sensorstrom gespeist werden, deren Entladung aber voneinander entkoppelt erfolgt. Ein Kondensator (46) ist zur Speisung von Relaisspulen vorhanden, der andere (35) zur Versorgung von Funktionseinheiten, insbesondere eines Mikrocomputers.

Bei derartigen elektronischen Überlastrelais mit Stromversorgung durch Stromentnahme aus dem Lastkreis besteht das grundsätzliche Problem, daß nach dem Einschalten eines Motors eine 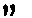 Totzeit" gegeben ist, während der noch keine Stromerfassung zur Temperaturberechnung möglich ist, weil erst durch Ladung eines Energiespeichers eine für den Betrieb der Funktionseinheiten erforderliche Versorgungsspannung aufgebaut werden muß. Dadurch fehlen für die Temperaturberechnung Meßwerte, insbesondere aus dem Anlaufbereich mit üblicherweise erhöhter Stromaufnahme. Außerdem fehlt nach der Abschaltung der Last eine Energiezufuhr zur Speisung der Elektronik, die aber zur Ermittlung der Temperatur möglichst noch weiterarbeiten soll. Es besteht somit Bedarf an Maßnahmen, die eine höhere Genauigkeit der Temperaturberechnung ermöglichen.

Der Erfindung liegt die Aufgabe zugrunde, ein elektronisches Überlastrelais mit Eigenstromversorgung anzugeben, bei dem Maßnahmen getroffen sind, um eine höhere Genauigkeit der Temperaturberechnung zu erreichen.

Diese Aufgabe wird bei einem elektronischen Überlastrelais gemäß dem Oberbegriff des Anspruchs 1 durch dessen kennzeichnende Merkmale gelöst. Vorteilhafte Ausgestaltungen sind in weiteren Ansprüchen angegeben.

Beim erfindungsgemäßen elektronischen Überlastrelais mit Eigenstromversorgung durch Energiespeicherung in zwei Kondensatoren wird der Hauptkondensator mit hoher Kapazität, welcher die Energie für Schaltvorgänge und Langzeitversorgung der elektronischen Funktionseinheit enthält, erst geladen, wenn mittels des relativ geringen Sensorstromes ein Hilfskondensator mit kleiner Kapazität auf einen vorgegebenen Spannungspegel VDDₘᵢₙ geladen ist.
Damit wird erreicht, daß die am Hilfskondensator angeschlossene Funktionseinheit zur Temperaturberechnung sehr schnell die benötigte Versorgungsspannung erhält und damit eine genaue Temperaturberechnung ermöglicht ist.
Die Ladung des Hauptkondensators wird beendet wenn ein zweiter vorgegebener Spannungspegel VDDₙₑₙₙ erreicht ist. Nach dem Abschalten des Motors, wenn kein Sensorstrom fließt, speist der Hauptkondensator mit seiner verbliebenen Restladung über eine Entkopplungsdiode den Hilfskondensator. In einem Ausführungsbeispiel ist ein Hilfskondensator mit 47µF und ein Hauptkondensator mit 2200µF gewählt.

Die Verzögerungszeit, bis der Hauptkondensator geladen ist und damit eine Auslösefähigkeit gegeben ist, ist akzeptabel, da nicht sofort nach dem Einschalten eines Motors eine Abschaltung wegen Übertemperatur erforderlich ist.

Gemäß einer bevorzugten Ausführung des elektronischen Überlastrelais ist vorgesehen, die Ermittlung der Verbrauchertemperatur während einer Abkühlphase nach dem Abschalten des Verbrauchers dadurch zu verbessern, daß die im Hilfskondensator gespeicherte Energie besonders sparsam eingesetzt wird. Durch eine stufenweise Abschaltung nicht benötigter Funktionsblöcke wird dabei eine deutlich verlängerte Temperaturberechnungsdauer und eine daran sich anschließende Temperaturwert-Speicherdauer ermöglicht. Die damit erreichbare Gesamtdauer von der Verbraucherabschaltung bis zum Ende der Temperaturwert-Speicherdauer ist so lange, daß danach der Temperaturwert ohne weiteres auf einen Initalisierungswert, z.B. einem typischen Umgebungswert gesetzt werden kann. Erfolgt dagegen noch vor dieser Initialisierung eine Wiedereinschaltung des Verbrauchers, so steht ein besonders genauer Temperatur-Anfangswert zur Verfügung.

Eine weitere Beschreibung der Erfindung erfolgt nachstehend anhand der Zeichnung.

Es zeigen:
- Fig. 1: eine prinzipielle Schaltungsanordnung des Überlastrelais,
- Fig. 2: einen Verlauf der Spannung am Hilfskondensator, und
- Fig. 3: Vorgänge beim Abschalten eines Motors.

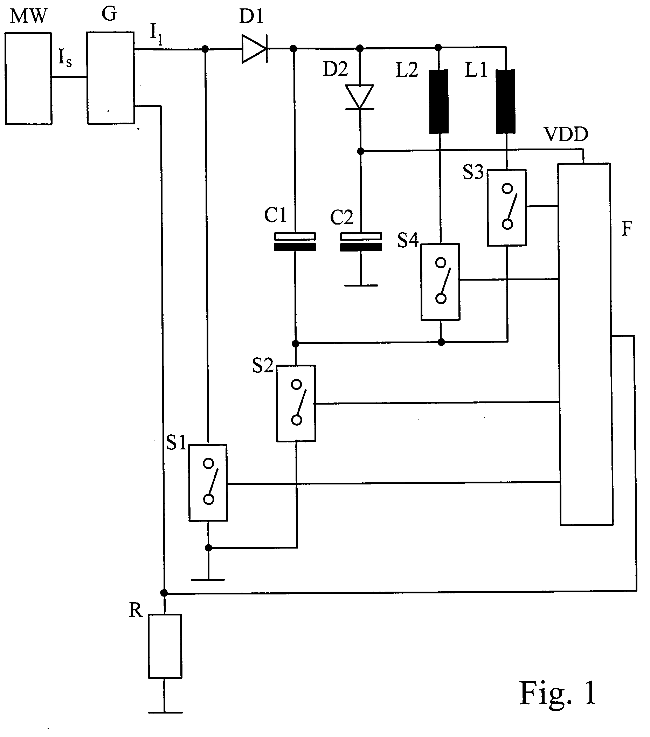

Figur 1 zeigt in einer Prinzipdarstellung lediglich die zur Erläuterung der Erfindung erforderlichen Komponenten eines elektronischen Überlastrelais.

Es sind erste Mittel MW vorhanden zur Entnahme wenigstens eines Sensorstroms I_{S} aus einem nicht dargestellten Lastkreis. Ein solcher Lastkreis wird z.B. durch einen an ein Drehstromnetz über Schalt- und Schutzeinrichtungen angeschlossenen Elektromotor gebildet. In einem solchen Fall werden vorzugsweise mittels Wandlern aus allen drei Phasen Sensorströme entnommen.

Nach Gleichrichtung des wenigstens einen Sensorstroms I_{S} mittels einer Gleichrichteranordnung G steht ein Ladestrom I_{L} für erste und zweite Kondensatoren C1, C2 zur Verfügung. Mit D1 und D2 sind Entkopplungsdioden bezeichnet. Der zuvor als Hilfskondensator bezeichnete zweite Kondensator C2 hat eine relativ kleine Kapazität, z.B. 47 µF und ist ständig mit der Gleichrichteranordnung G verbunden. Am zweiten Kondensator C2 wird eine Versorgungsspannung VDD für Funktionseinheiten F abgegriffen.

Zur Regelung der Versorgungsspannung VDD ist ein erster Halbleiterschalter S1 vorhanden. Mit Hilfe des ersten Halbleiterschalters S1 wird die Spannung VDD auf einen höchsten zulässigen Spannungspegel von beispielsweise VDDₙₑₙₙ = 10,5 Volt begrenzt. Mit Hilfe eines zweiten Halbleiterschalters S2 wird der erste Kondensator C1 nur dann zugeschaltet, wenn die Versorgungsspannung VDD den Mindestwert VDDₘᵢₙ, z.B. 9,5 V erreicht hat. Der zuvor als Hauptkondensator bezeichnete erste Kondensator C1 mit hoher Kapazität ist dafür ausgelegt, die Schaltenergie zum Betätigen von Schaltelementen für Trip und Reset zu liefern. In Figur 1 sind die Betätigungsspulen L1, L2 für Trip und Reset dargestellt, die mittels dritten und vierten Halbleiterschaltern S3, S4 mit dem ersten Kondensator C1 verbindbar sind.

Die Steuerung der vier Halbleiterschalter S1 bis S4 erfolgt durch die Funktionseinheiten F. Die Funktionseinheiten F umfassen die für ein elektronisches Überlastrelais erforderlichen Funktionsblöcke, wie digitaler Rechenblock oder Mikrocontroller, AD-Umsetzer, Verstärker, Filter, Taktgenerator, Spannungsregler und Referenzspannungsquelle, die vollständig oder teilweise durch eine Kundenschaltung realisierbar sind.

Der Gesamtladestrom I_{L} fließt über einen Meßwiderstand R. An ihm wird eine zum Strom im Lastkreis korrespondierende Meßspannung abgegriffen, den Funktionseinheiten F zugeführt und dort zur Temperaturberechnung genutzt.

Die Aufladezeit der Kondensatoren C1, C2 ist reziprok proportional zum fließenden Laststrom. Die Zeit, bis die volle Funktionsfähigkeit, also auch Auslöse- und Rücksetzfähigkeit erreicht ist, kann typisch zwischen 0,5 Sekunden und 6 Sekunden liegen. Während dieser Zeit werden Spannungsbereiche durchlaufen, die in den Funktionseinheiten bestimmte Funktionszustände bewirken.

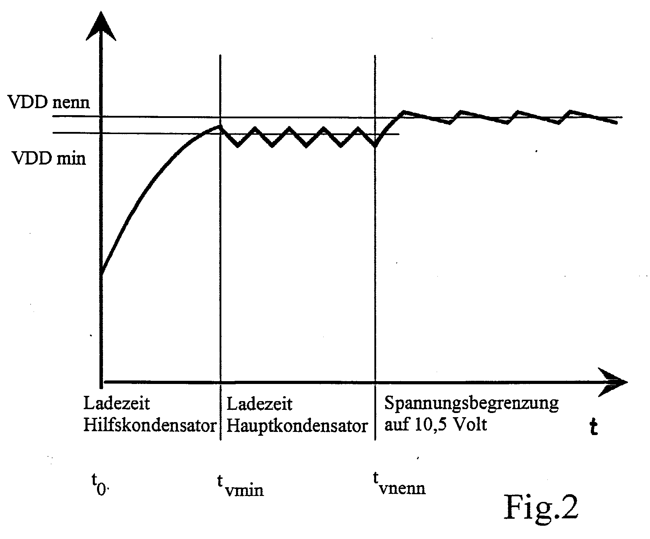

Figur 2 zeigt einen typischen Verlauf der am Kondensator C2 abgreifbaren Versorgungsspannung VDD nach dem Einschalten eines Motors.

Dabei erfolgt nach dem Einschalten zu einem Zeitpunkt t₀ ein Anstieg der Spannung VDD, bei Null oder einer Restspannung beginnend.

Zu einem mit tᵥₘᵢₙ bezeichneten Zeitpunkt hat die Spannung VDD einen Wert VDDₘᵢₙ erreicht. Die bei diesem Pegel dem Kondensator C2 entnehmbare Energie reicht aus, um die für die Überwachungsfunktion erforderlichen Funktionsbereiche der Funktionseinheiten F zu betreiben, wie beispielsweise Spannungsregler, Referenzspannungsquelle, Oszillator, Rechenblock, Eingangsverstärker und AD-Umsetzer. Das bedeutet, daß die Temperaturberechnung durchgeführt werden kann.

Bei einem Motoranlaufstrom, der das 5-6-fache des Nennstroms beträgt, kann der Zeitpunkt tᵥₘᵢₙ nach einer Verzögerungsdauer D von weniger als 100 ms erreicht werden.

Erst nach dem Zeitpunkt tᵥₘᵢₙ wird C1 mit S2 zum Aufladen freigegeben.
Zu einem Zeitpunkt t_{Vnenn} ist der Nennwert der Versorgungsspannung VDD, also VDDₙₑₙₙ erreicht. Danach wird mittels eines Schaltreglers, in Fig. 1 dargestellt durch den gesteuerten ersten Halbleiterschalter S1, die Spannung VDD in einem engen Toleranzband konstant gehalten.

Erst zu diesem Zeitpunkt t_{Vnenn} wird die Ladung des ersten Kondensators C1 zur Betätigung der Auslöse- und Rücksetzeinrichtung freigegeben.

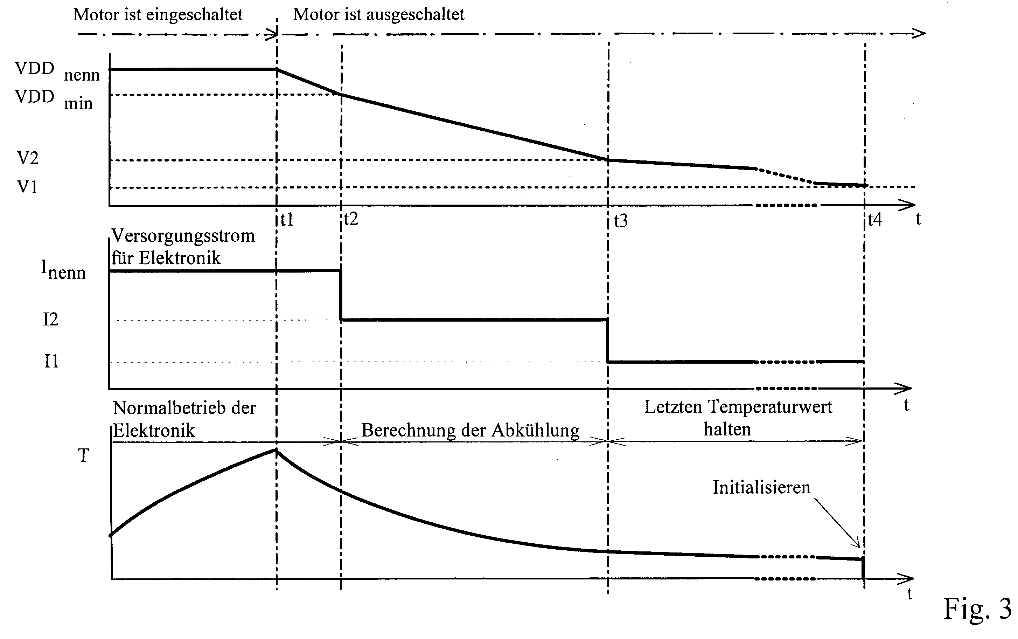

Fig. 3 zeigt im oberen Teil der Zeichnungsfiguren einen Verlauf der Spannung VDD am zweiten Kondensator C2, aufgetragen über der Zeit t. Dargestellt ist eine Situation, in der ein Motor bereits einige Zeit eingeschaltet ist und am Kondensator C2 die Nennspannung VDDₙₑₙₙ erreicht ist.

Im mittleren Teil der Fig. 3 ist korrespondierend zur obigen Darstellung der Strom I aufgetragen, den die Funktionseinheiten F aufnehmen. Diese arbeiten zunächst im Überwachungsmodus und nehmen einen Nennstrom Iₙₑₙₙ auf.

Im unteren Teil der Fig. 3 ist dazu korrespondierend die berechnete Motortemperatur T aufgetragen, die ansteigt, bis der Motor zu einem Zeitpunkt t1 abgeschaltet wird.

Aus dem mittleren Teil der Fig. 3 ist ersichtlich, daß nach dem Zeitpunkt t1 weiterhin der Nennstrom Iₙₑₙₙ fließt, also volle Überwachungsfunktion gegeben ist, bis zu einem Zeitpunkt t2 die Versorgungsspannung VDD auf einen Wert VDDₘᵢₙ abgefallen ist, und ein Teil der Funktionseinheiten abgeschaltet wird. Funktionsfähig bleiben die zur Berechnung der Abkühlkurve notwendigen Funktionsblöcke, wobei die Stromaufnahme auf einen Wert I2 absinkt. Zu einem Zeitpunkt t3 wird dann die Stromaufnahme weiter reduziert auf einen Wert I1, indem die Temperaturberechnung abgebrochen wird und der letzte Temperaturwert lediglich gespeichert wird. Der Zeitpunkt t3 wird durch den Abfall der Versorgungsspannung VDD auf einen Wert V2 bestimmt.

Wenn die Versorgungsspannung VDD weiter gesunken ist, nämlich auf einen Wert V1 zum Zeitpunkt t4 wird der Temperaturwert auf einen Initialisierungswert rückgesetzt.

Es versteht sich, daß die dargelegten Maßnahmen, nämlich die Art der Ladungssteuerung der Kondensatoren C1, C2, wie auch die gestufte Abschaltung von Funktionsblöcken der Elektronik nicht nur für elektronische Überlastrelais, sondern auch für ähnlich gelagerte Anwendungsfälle geeignet sind.

## Patentansprüche

1. Elektronisches Überlastrelais zum Schutz eines elektrischen Verbrauchers, insbesondere eines Drehstrommotors, das aufweist:
a) erste Mittel (MW) zur Entnahme wenigstens eines Sensorstroms (I_{S}) aus einem durch ein Versorgungsnetz und den Verbraucher gebildeten Lastkreis,
b) einem Gleichrichter (G), mit dem der Sensorstrom (I_{S}) gleichgerichtet wird zur Lieferung eines Ladestroms (I_{L}),
c) einen ersten Kondensator (C1), der mit wenigstens einem Teil des Ladestroms (I_{L}) aufgeladen wird und der Schaltenergie bereitstellt zur Betätigung von Auslöse- und Rücksetzeinrichtungen (L1, L2),
d) einen zweiten Kondensator (C2), der ständig mit wenigstens einem Teil des Ladestroms geladen wird und der Energie zur Speisung von elektronischen Funktionseinheiten (F) des Überlastrelais liefert,
e) zweite Mittel (R), mit denen ein zum Sensorstrom (I_{S}) korrespondierendes Meßsignal gebildet ist, und
f) dritte Mittel (F) zur Berechnung von Temperaturen und zur Ermittlung einer Überlastsituation auf der Grundlage des Meßsignals und eines in den dritten Mitteln (F) gespeicherten thermischen Modells des Verbrauchers, wobei eine Verzögerungsdauer (D) gegeben ist, die nach einem Einschalten des Verbrauchers vergeht, bis ausreichend Energie zur Speisung der Berechnungsmittel (F) zur Verfügung steht,
dadurch gekennzeichnet, daß zur Erhöhung der Berechnungsgenauigkeit durch Verkürzung der Verzögerungsdauer (D) und durch Verlängerung der Dauer der Funktionsfähigkeit der Berechnungsmittel (F) nach dem Abschalten des Verbrauchers
g) Mittel (S2, F) vorhanden sind, die bewirken, daß der erste Kondensator (C1) nur dann geladen wird, wenn am zweiten Kondensator (C2) ein vorgegebener Mindestwert der Spannung (VDDₘᵢₙ) erreicht oder überschritten ist, und
h) Mittel (S2, F, D2) vorhanden sind, die bewirken, daß nach dem Abschalten des Verbrauchers der zweite Kondensator (C2) mit gespeicherter Energie aus dem ersten Kondensator (C1) gespeist wird.

2. Überlastrelais nach Anspruch 1, dadurch gekennzeichnet, daß die Kapazität des ersten Kondensators (C1) ein Vielfaches der Kapazität des zweiten Kondensators (C2) beträgt.

3. Überlastrelais nach einem der vorstehenden Ansprüche, dadurch gekennzeichnet, daß die Kapazität des ersten Kondensators (C1) bei etwa 2200 µF und die des zweiten Kondensators (C2) bei etwa 47 µF liegt.

4. Überlastrelais nach einem der vorstehenden Ansprüche, dadurch gekennzeichnet, daß als Mittel zur Steuerung der Ladung des ersten Kondensators (C1) ein erster Halbleiterschalter (S2) vorhanden ist, sowie Funktionseinheiten (F), die in Abhängigkeit von erreichten Versorgungsspannungen (VDD) den ersten Halbleiterschalter (S2) steuern.

5. Überlastrelais nach einem der vorstehenden Ansprüche, dadurch gekennzeichnet, daß ein zweiter gesteuerter Halbleiterschalter (S1) vorhanden ist, der eine am zweiten Kondensator (C2) abgegriffene Versorgungsspannung (VDD) auf einen zulässigen Höchstwert begrenzt.

6. Überlastrelais nach einem der vorstehenden Ansprüche, dadurch gekennzeichnet, daß zur Verbesserung der Genauigkeit der Temperaturermittlung Mittel (F) vorhanden sind, die bewirken, daß im Überlastrelais nach der Abschaltung des Verbrauchers eine Umschaltung von einer vollen Überwachungsfunktion auf nur noch eine Temperaturberechnungsfunktion erfolgt, wenn die Versorgungsspannung (VDD) auf einen dritten Spannungswert, nämlich den Mindestwert der Spannung (VDDₘᵢₙ) abgefallen ist.

7. Überlastrelais nach Anspruch 6, dadurch gekennzeichnet, daß Mittel (F) vorhanden sind, die bewirken, daß nach einem weiteren Abfall der Versorgungsspannung (VDD) auf einen zweiten Spannungswert (V2) die Temperaturberechnungsfunktion abgeschaltet und der zuletzt berechnete Temperaturwert gespeichert bleibt, bis zu einem späteren Zeitpunkt (t4) die Versorgungsspannung (VDD) auf einen ersten Spannungswert (V1) gesunken ist, und der Temperaturwert auf einen Initialisierungswert gesetzt wird.
